# EUROPEAN PATENT APPLICATION

(11) **EP 2 319 588 A1**
(43) Date of publication of application: **11.05.2011**
(21) Application number: 08806911.7
(22) Date of filing: 31.07.2008
(51) Int. Cl.: A62C 3/10, B63B 3/68, B29C 70/06, B32B 27/12, B29L 31/30, E04B 1/94

(54) **FLAME-RETARDING ARRANGEMENT IN REINFORCED-PLASTIC BOATS**

(71) Applicant: Naval Cat Internacional S.A.S., Rionegro (CO)
(72) Inventor: Celis Marin, Jorge Enrique, 11111 Medellin (CO)
(74) Representative: Pons Ariño, Angel
(86) International application number: PCT/IB2008/002195
(87) International publication number: WO 2010/013085

(57) **Abstract**

Flame-retarding arrangement for reinforced-plastic boats which may be of two kinds: 1.1 Solid laminate arrangement formed by various layers of reinforced plastic with flame-retarding additives, with a coating of intumescent paint; or, 1.2 Sandwich-type laminate arrangement formed by: a) a core material (1), this being a fireproof, low-weight, compact or meshed material made of metal, wood or structural foam; b) two films (2) of reinforced plastic with flame-retarding additives, which have a coating of intumescent paint, this being located on the sides of the core (1); and c) an adhesive (3) which bonds the two films (2) to the core (1).

## Description

### TECHNOLOGICAL SECTOR

This invention patent application refers to a fire-restrictive arrangement for structural protection against fire on reinforced plastic ships.

### OBJECT OF INVENTION

One of the purposes of this invention is to produce a passenger ship complying with the structural protection requirements demanded to obtain an A1+ Commercial Passenger Vessel Unrestricted Service.

Another purpose is to make the materials used to build the vessels have a structural protection against fire, are not deformed under heat, thus avoiding the subsequent loss of structural stability of the material.

### DESCRIPTION OF INVENTION

The IACS (International Association of Classification Societies) is the international body joining the ten main societies that classify boats in the world, namely: ABS, BV, CCS, DNV, GL, KR, LR, NK, RINA, RS. From the point of view of the geographic zone a boat is able to sail, the classification thereof could be: Restricted or Unrestricted Service, the latter being a higher level because the vessel is able to sail on every zone of the sea. Therefore, in the particular case of a passenger vessel, the maximum classification obtained from those classifying societies is A1+ Commercial Passenger Vessel Unrestricted Service.

In order to obtain the classification of Unrestricted Service, one of the most important items demanded by the classifying societies is the structural protection against fire, it means, the material or set of materials used in the construction of the vessel is fire-resistant. The basic principles to guarantee that the material is fire-resistant are documented in four standards accepted by the societies members of the IACS: SOLAS 1974 Convention, High Speed Craft Safety Code (HSCS Code, Section 7.4), Fire Test Procedure Code, and Fire Safety System Code.

For materials that are incombustible by nature, such as steel, the compliance of the requirements expressed in each one of the mentioned standards is to guarantee that some parameters shall not exceed some established limits, such as temperature, incombustibility, toxic gas emission, flammability and mechanical stability under temperature changes.

For materials that are combustible by nature, such as the compound polymeric materials, the compliance with these standards is much more complex, because it implies the design of an arrangement of materials that could be classified as a fire-restrictive arrangement, it means, it implies to combine a set of materials in appropriate amounts to obtain a final product that could be classified as a fire-restrictive product to construct vessels.

The term fire-resistant is for any material or set of materials or arrangement that complies with the following:
1) It is incombustible or fire-restrictive
2) It protects zones adjacent to the fire zone for the time set forth in the standard
3) It has load-bearing capacity in case of fire

Therefore, the first point to comply is to have an incombustible or fire-restrictive material or arrangement. A material is fire-restrictive if it complies with Resolution MSC.40(64), which implies testing the material under ISO 9705 Standard: Corner Fire Essay.

Reinforced plastics to construct vessels, to be considered as fire-restrictive materials, need to be used with fire-retarding additives and the application of a sacrificial material, that suffers the consequences of ignition before the reinforce plastic does; in this case the material is intumescent paint.

Reinforced plastics can be made of any compound material with thermo-stable polymer matrix and structural fiber reinforcement. For naval applications, the thermo-stable polymer are unsaturated resins such as polyester, vinyl ester, epoxy and others; structural fiber, such as glass fiber, Kevlar, carbon and others. Thermo-stable polymer materials, being of organic nature, are combustible, which means that they are inflammable and promote fire. In order to diminish the flammability of this kind of materials, one of the feasible solutions is to use sacrificial materials that swell with fire to prevent the protected substratum to burn for a given time. It is obvious that the fundamental requirement is that the sacrificial material is compatible with the substratum.

The sacrificial surface material is an intumescent paint, which suffers the effects of ignition before the reinforced plastic does. Intumescent paint is the one that develops a protecting thermo-insulating foam under the action of fire or flame, with a low thermal conductivity, thus protecting the substratum from the action of fire, preventing the spreading of heat and toxic gases. It means, the paint swells with fire, preventing the fire to burn the substratum (reinforced plastic in this case) for a given time, which depends on the thickness of the paint layer. The paint does not emit toxic gases when burnt, and it could be easily replaced with a process of scraping the burnt part and then zonal application.

The use of fire-retarding additives remarkably reduces the problem of fire spreading, which means that for a punctual fire source, the material does not propagate the fire while that zone is not degraded by the effect of heat. Fire-retarding additives are necessary as part of the solution to the problem of structural fire protection, but are not sufficient, because they do not reduce the flammability of the material at the ignition point, do not guarantee structural stability with thermal deformation, and do not reduce the heat transfer from the exposed side to the unexposed side. The only thing they do is to reduce the undesirable property of unsaturated resins to spread the fire significantly.

It is verified that the material or set of materials is able to keep the temperature of the zones adjacent to the fire under certain limits set forth by the standards for a given time. For example, in the case of high speed passenger vessels, the temperature limit is 140°C on the unexposed wall and the time varies according to the level of required protection:
- High: 60 minutes
- Medium: 30 minutes
- Medium-Low: 15 minutes
- Low: 0 minutes

The lower you keep the temperature on the unexposed side for the longer time, more effective is the fire-restrictive arrangement considered.

There are three variable related to that, namely:
- Thickness of the intumescent paint layer. The pain is well-known in the civil construction industry, particularly for metal and wood substrata. In the case of reinforced plastic vessel construction, the paint thickness has been established for thermo-stable resins with structural fiber reinforcement, according to the requirement of each section of the vessel and the provisions set forth in the HSCS Code.
- Reinforced plastic thickness. As a simple law of conduction, the thicker the reinforced plastic is, the lower the temperature on the unexposed side.
- The presence / lack of core-type material. On a vessel, the classifying societies allow basically two setups using reinforced plastics: massive lamination and sandwich-type lamination.

Massive lamination is the one made of several layers of structural fiber on an unsaturated resin matrix.

Sandwich-type lamination is composed of three elements, that is: a material called core (1), which resists the shear force, located between two films (2), which resist the bending force, and an adhesive (3).

The films (2) are of reinforced plastic.

The core (1) is the element located between the two films.

The core material is metal or wood or structural foam, incombustible, with good resistance to rusting, good mechanical properties, and low weight. It could be compact or reticulated. From the point of view of thermal insulation, the use of a core is particularly convenient because it implies a thickness greater than the thickness of a massive lamination with the same resistance characteristics, which implies a reduction in heat transfer, whenever the thermal conductivity of the core material is not too high with respect to the one of films.

The last characteristic of the fire-resistant materials or arrangements is the load-bearing capacity under fire. It refers to the capacity to keep the mechanical properties before a temperature increase. Such capacity is assessed under Resolution MSC.45(65) of the HSCS Code. The variables involved in this property are:
- For sandwich-type: material, density and geometric setup of the core.
- For massive and sandwich-type: thickness and kinds of layers of structural fiber of the reinforced plastic film.
- For sandwich-type: the type of adhesive employed.

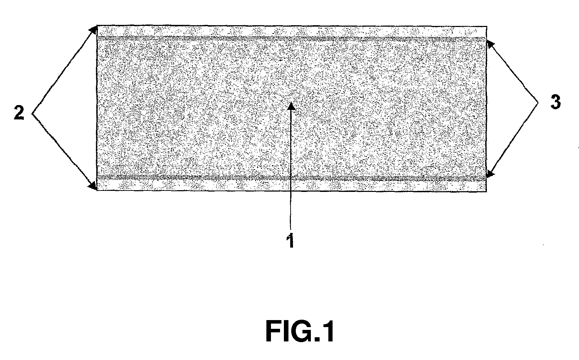

## Claims

1. Fire-restrictive arrangement for vessels with reinforced plastic, WHERE the arrangement can be one of two kinds:
1.1 Massive lamination arrangement, composed of several layers of reinforced plastic with fire-retarding additives, with an intumescent paint coating; or,
1.2 Sandwich-type lamination arrangement, composed of:
a) a material called core (1), which is a compact or reticulated, metal or wood or structural foam, incombustible, low weight material;
b) two films (2) of reinforced plastic with fire-retarding additives, with an intumescent paint coating, located on both sides of the core (1); and
c) an adhesive (3) that sticks both films (2) to the core (1).

2. The fire-restrictive arrangement for vessels with reinforced plastic of Claim 1, WHERE the lamination thickness, the film (2) thickness and the core (1) depend on the fire resistance demanded for that arrangement.

3. The fire-restrictive arrangement for vessels with reinforced plastic of Claim 1, WHERE the reinforced plastic could be of any material composed of a thermo-stable polymer matrix and structural fiber reinforcement; where the thermo-stable polymer could be unsaturated resins such as polyester, vinyl ester, epoxy and others; and the structural fiber reinforcement could be glass fiber, Kevlar, carbon or others.
